# EUROPEAN PATENT APPLICATION

(11) **EP 4 664 435 A1**
(43) Date of publication of application: **17.12.2025**
(21) Application number: 23928568.7
(22) Date of filing: 20.03.2023
(51) Int. Cl.: G08G 1/16, B60W 40/06

(54) **CONTROL APPARATUS FOR MOVING BODY, CONTROL METHOD FOR MOVING BODY, AND PROGRAM**

(71) Applicant: HONDA MOTOR CO., LTD., Tokyo 105-8404 (JP)
(72) Inventor: TSUDA Kohei, Wako-shi, Saitama 351-0193 (JP); KOMURO Misa, Wako-shi, Saitama 351-0193 (JP)
(74) Representative: Kiwit, Benedikt
(86) International application number: PCT/JP2023/010887
(87) International publication number: WO 2024/194985

(57) **Abstract**

A control apparatus for a moving body that moves by recognizing a movable area, the control apparatus including: an object recognizing unit inputting a non-depth image, which is an image in which a surrounding area of the moving body is imaged, not directly including depth information and recognizing a dynamic object imaged in the non-depth image; a movable area recognizing unit inputting a depth image in which the surrounding area of the moving body is imaged and recognizing a movable area in the surrounding area of the moving body on the basis of a recognition result of the dynamic object acquired by the object recognizing unit and the depth image; and a control unit controlling a driving device disposed in the moving body to move in the movable area, in which the movable area recognizing unit recognizes a blind spot area that becomes a blind spot from the moving body due to an obstacle other than the dynamic object in the surrounding area of the moving body and recognizes an area except for an area of the obstacle other than the dynamic object and the blind spot area as the movable area.

## Description

### TECHNICAL FIELD

The present invention relates to a control apparatus for a moving body, a control method for a moving body, and a program.

### BACKGROUND ART

In recent years, efforts to realize a low-carbon society or a decarbonized society have been gaining momentum, and in order to reduce CO2 emissions and improve energy efficiency also in vehicles, research and development on electrically-powered moving bodies that can travel both on sidewalks and roadways has been conducted. As an example of such research and development, in order to ensure that the detection accuracy of a moving body is not degraded even in a case in which occlusion occurs, a technology for correcting current observation information on the basis of previous estimation results when the presence situation and the movement situation of a moving body are estimated on the basis of observation information about the moving body object has been proposed (for example, see Patent Document 1). As another example, a technology for removing the data of mobile bodies included in map data such that other moving bodies are not included in the map data when the map data is generated using SLAM has been proposed.

### Citation List

### Patent Document

Patent Document 1: Japanese Unexamined Patent Application, First Publication No. 2020-046762
Patent Document 2: Japanese Unexamined Patent Application, First Publication No. 2021-124781

### SUMMARY OF INVENTION

### Technical Problem

However, there are cases in which a movable area for a moving body cannot be appropriately recognized from map data generated using conventional technologies. More specifically, a time during which a dynamic object such as a person occupies an area is short, and there are cases in which such a dynamic object can actually be moved through negotiation and the like, and thus there are cases in which an area occupied by such a dynamic object cannot be recognized as a movable area.

The present invention is in consideration of such situations, and one object thereof is to provide a control apparatus for a moving body, a control method for a moving body, and a program capable of enabling a movable area around a moving body to be more appropriately recognized. Furthermore, this contributes to the improvement of energy efficiency.

### Solution to Problem

A control apparatus for a moving body, a control method for a moving body, and a program according to the present invention employ the following configurations.
(1): A control apparatus for a moving body according to one aspect of the present invention is a control apparatus for a moving body that moves by recognizing a movable area, the control apparatus including: an object recognizing unit inputting a non-depth image, which is an image in which a surrounding area of the moving body is imaged, not directly including depth information and recognizing a dynamic object imaged in the non-depth image; a movable area recognizing unit inputting a depth image in which the surrounding area of the moving body is imaged and recognizing a movable area in the surrounding area of the moving body on the basis of a recognition result of the dynamic object acquired by the object recognizing unit and the depth image; and a control unit controlling a driving device disposed in the moving body to move in the movable area, in which the movable area recognizing unit recognizes a blind spot area that becomes a blind spot from the moving body due to an obstacle other than the dynamic object in the surrounding area of the moving body and recognizes an area except for an area of the obstacle other than the dynamic object and the blind spot area as the movable area.
(2): In the aspect (1) described above, the movable area recognizing unit may recognize the area of the dynamic object as the movable area by removing depth information of the dynamic object detected from the non-depth image from the depth image.
(3): In the aspect (1) or (2) described above, the movable area recognizing unit converts a depth image not including depth information of the dynamic object into a three-dimensional point cloud and estimates a length of a depth of the blind spot area seen from the moving body using geometric calculation based on coordinates of the three-dimensional point cloud.
(4): In the aspect (3) described above, the movable area recognizing unit generates a surrounding area map of the moving body by projecting the three-dimensional point cloud onto a horizontal surface from a height direction.
(5): In the aspect (4) described above, in a case in which a situation of obstacles has not been identified for a blind spot area due to the dynamic object, the movable area recognizing unit manages the blind spot area as an unclear area until the situation of obstacles is identified and updates the surrounding area map while identifying the situation of obstacles in the unclear area in accordance with changes in a viewpoint position of the moving body.
(6): In the aspect (3) described above, the movable area recognizing unit estimates the length of the depth of the blind spot area on the basis of a height of the obstacle and a viewpoint position of the moving body.
(7): In any one of the aspects (1) to (6) described above, the movable area recognizing unit estimates whether or not a target area is a blind spot area on the basis of a recognition result for the target area based on depth images of multiple frames.
(8): In any one of the aspects (1) to (7) described above, the movable area recognizing unit connects an area of an obstacle and the blind spot area due to the obstacle, recognizes the connected area as an unmovable area, and recognizes an area outside of the unmovable area as a movable area.
(9): In any one of the aspects (1) to (8) described above, in a case in which a situation of obstacles was able to be identified for some or all of blind spot areas while performing analysis of the movable area for a new depth image acquired in accordance with movement of the moving body, the movable area recognizing unit stores information representing the situation of obstacles that were able to be identified for the some or all of the blind spot areas.
(10): In any one of the aspects (1) to (9) described above, the movable area recognizing unit recognizes the some or all of the blind spot areas for which the situation of obstacles was able to be identified as a movable area.
(11): A control method for a moving body according to another aspect of the present invention is a control method for a moving body that moves by recognizing a movable area using a control apparatus for the moving body, the control method including: an object recognizing process of inputting a non-depth image, which is an image in which a surrounding area of the moving body is imaged, not directly including depth information and recognizing a dynamic object imaged in the non-depth image; a movable area recognizing process of inputting a depth image in which the surrounding area of the moving body is imaged and recognizing a movable area in the surrounding area of the moving body on the basis of a recognition result of the dynamic object acquired in the movable area recognizing process and the depth image; and a control process of controlling a driving device disposed in the mobile body to move in the movable area, in which, in the movable area recognizing process, a blind spot area that becomes a blind spot from the moving body due to an obstacle other than the dynamic object in the surrounding area of the moving body is recognized, and an area except for an area of the obstacle other than the dynamic object and the blind spot area is recognized as the movable area.
(12): A program according to another aspect of the present invention is a program causing a control apparatus for a moving body that moves by recognizing a movable area to execute: an object recognizing process of inputting a non-depth image, which is an image in which a surrounding area of the moving body is imaged, not directly including depth information and recognizing a dynamic object imaged in the non-depth image; a movable area recognizing process of inputting a depth image in which the surrounding area of the moving body is imaged and recognizing a movable area in the surrounding area of the moving body on the basis of a recognition result of the dynamic object acquired in the movable area recognizing process and the depth image; and a control process of controlling a driving device disposed in the moving body to move in the movable area, in which, in the movable area recognizing process, a blind spot area that becomes a blind spot from the moving body due to an obstacle other than the dynamic object in the surrounding area of the moving body is recognized, and an area except for an area of the obstacle other than the dynamic object and the blind spot area is recognized as the movable area.

### Advantageous Effects of Invention

According to the aspects (1) to (12), a movable area around a moving body can be more appropriately recognized.

### BRIEF DESCRIPTION OF DRAWINGS

FIG. 1 is a diagram illustrating an example of the configuration of a moving body and a control apparatus according to an embodiment.
FIG. 2 is a perspective view of a moving body seen from above.
FIG. 3 is a flowchart illustrating an example of the flow of a process executed by the control apparatus 100 for recognizing a blind spot area.
FIG. 4 is a diagram for describing an example of the process of removing depth information of a dynamic object from a depth image.
FIG. 5 is a diagram illustrating an example of a three-dimensional point cloud converted from a depth image.
FIG. 6 is a diagram for describing an example of a method of recognizing a blind spot area according to a dynamic object.
FIG. 7 is a diagram for describing an example of a method of recognizing a height of an obstacle in a cell of a surrounding area map.
FIG. 8 is a diagram for describing an example of a method of recognizing the length of a depth in a blind spot area.
FIG. 9 is a diagram for describing an example of a method of managing an area in which the status of obstacles is not identified in a blind spot area as an unclear area.
FIG. 10 is a diagram for describing an example of a method of judging whether or not an area is a blind spot area.
FIG. 11 is a diagram for describing an example of a method of recognizing an area in which driving is possible.

### DESCRIPTION OF EMBODIMENTS

Hereinafter, a control apparatus for a moving body, a control method for a moving body, and a program according to an embodiment of the present invention are described with reference to the drawings. The mobile body may be configured to move both on a roadway and in a predetermined area different from the roadway. The mobile body may be referred to as a micromobility. Electric kickboards are one type of micromobility. The moving body may be an occupant-boardable vehicle or an autonomous mobile body capable of unmanned autonomous driving. The latter autonomous mobile body, for example, is used for transporting luggage and the like. The predetermined area, for example, is an indoor space. The predetermined area may be some or all of a roadside strip, a bike lane, a public open space, and the like and may include all of a sidewalk, a roadside strip, a bike lane, a public open space, and the like. The control apparatus may be configured to remotely control the operation of a moving body by transmitting instructions via communication from a location remote from the moving body.

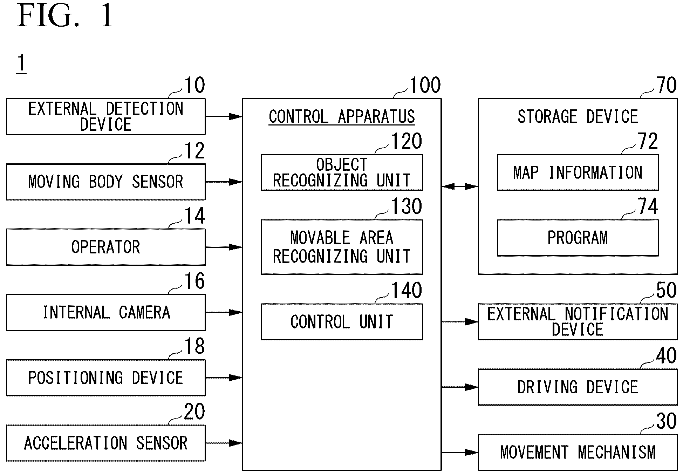

FIG. 1 is a diagram illustrating an example of the configuration of a moving body 1 and a control apparatus 100 according to an embodiment. In the moving body 1, for example, an external detection device 10, a moving body sensor 12, an operator 14, an internal camera 16, a positioning device 18, an acceleration sensor 20, a moving mechanism 30, a driving device 40, an external notification device 50, a storage device 70, and the control apparatus 100 are mounted. Some of these configurations that are not essential to realize the functions of the present invention may be omitted.

The external detection device 10 represents various devices that have a detection range in the direction of travel of the moving body 1. The external detection device 10 includes an external camera, a radar device, a Light Detection and Ranging (LIDAR), a sensor fusion device, and the like. The external detection device 10 outputs information (an image, a position of an object, and the like) representing detection results to the control apparatus 100. In this embodiment, the external detection device 10 acquires a depth image and a non-depth image of the surrounding environment of the moving body 1 and outputs the acquired images to the control apparatus 100. The non-depth image is an image that does not directly contain depth information and, for example, is an RGB image. Although the depth image and the non-depth image, typically, may be acquired by performing imaging in the direction of travel of the moving body 1, for the purpose of generating a surrounding area map to be described below, the images may be acquired by performing imaging in a direction other than the direction of travel. In the following description, the non-depth image is described to be an RGB image.

The moving body sensor 12 includes, for example, a speed sensor, a yaw rate (angular velocity) sensor, an orientation sensor, an operation amount detecting sensor attached to the operator 14, and the like. The operator 14 includes, for example, an operator for giving an acceleration/deceleration instruction (for example, an accelerator pedal or a brake pedal) and an operator for giving a steering instruction (for example, a steering wheel). In this case, the moving body sensor 12 may include an accelerator pedal position sensor, a brake pedal force sensor, a steering torque sensor, and the like. The moving body 1 may include operators of aspects other than those described above (for example, a non-circular rotary operator, a joystick, a button, and the like) as the operator 14.

The internal camera 16 images at least the head of an occupant of the moving body 1 from the front. The internal camera 16 is a digital camera that uses an imaging element such as a charge coupled device (CCD), a complementary metal oxide semiconductor (CMOS), or the like. The internal camera 16 outputs a captured image to the control apparatus 100.

The positioning device 18 is a device that determines the location of the moving body 1. The positioning device 18 is, for example, a global navigation satellite system (GNSS) receiver, identifies the location of the moving body 1 on the basis of signals received from GNSS satellites, and outputs the identified location as location information. The location information of the moving body 1 may be estimated from the location of a Wi-Fi (registered trademark, hereinafter the same) base station to which a communication device to be described below is connected.

The acceleration sensor 20 detects the acceleration of the moving body 1 and outputs a signal corresponding to the detected acceleration to the control apparatus 100. The acceleration sensor 20 detects the acceleration acting in a vertical direction (a height direction) in addition to a horizontal direction of the moving body 1.

The moving mechanism 30 is a mechanism used for moving the moving body 1. The moving mechanism 30 is, for example, a vehicle wheel group that includes a steering wheel and a drive wheel. In addition, the moving mechanism 30 may also be legs for multi-legged walking.

The driving device 40 moves the moving body 1 by outputting a force to the moving mechanism 30. For example, the driving device 40 includes a motor that drives drive wheels, a battery that stores power to be supplied to the motor, a steering device that adjusts the steering angle of the steering wheels, and the like. The driving device 40 may include an internal combustion engine, a fuel cell, or the like as a drive force output means or a power generating means. The driving device 40 may further include a braking device using a friction force or air resistance.

The external notification device 50 is, for example, a lamp, a display device, a speaker, or the like that is installed on an external panel part of the moving body 1 and is used for notification of information toward the outside of the moving body 1. For example, the external notification device 50 may perform a different external notification operation in accordance with the state of the moving body 1 during moving.

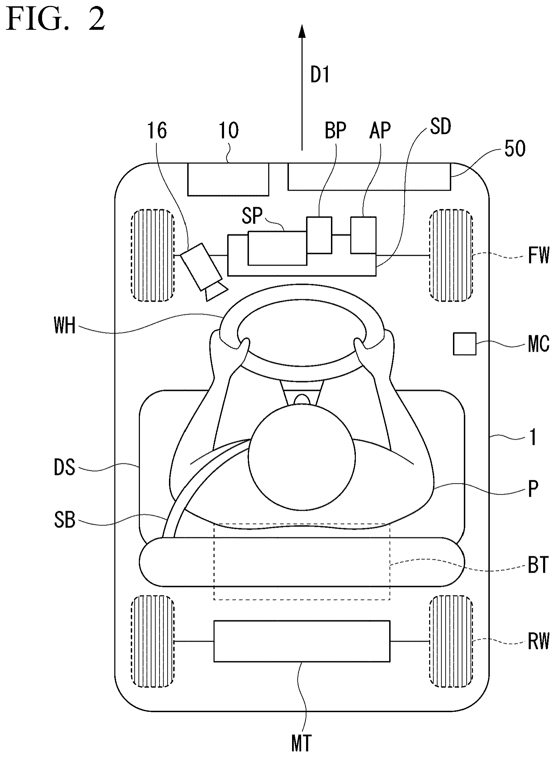

FIG. 2 is a perspective view of the moving body 1 seen from above. In the drawing, a steering wheel FW, a drive wheel RW, a steering device SD, a motor MT, and a battery BT are illustrated. The steering device SD, the motor MT, and the battery BT are included in the driving device 40. In addition, an accelerator pedal AP, a brake pedal BP, a steering wheel WH, a speaker SP, and a microphone MC are illustrated. The moving body 1 illustrated in the drawing is a single-occupant moving body, and an occupant P is seated in a driver's seat DS and wearing a seat belt SB. Arrow D1 is the direction of travel (a velocity vector) of the moving body 1. The external detection device 10 is installed near the front end of the moving body 1, and the internal camera 16 is installed at a position at which the head of the occupant P can be imaged from the front side of the occupant P. An external notification device 50 as a display device is installed near the front end of the moving body 1.

Referring back to FIG. 1, the storage device 70, for example, is a non-transitory storage device such as a hard disk drive (HDD), a flash memory, a random access memory (RAM), or the like. Map information 72, a program 74 executed by the control apparatus 100, and the like are stored in the storage device 70. Although the storage device 70 is illustrated to be outside the frame of the control apparatus 100 in the drawing, the storage device 70 may be included in the control apparatus 100.

### [Control Apparatus]

The control apparatus 100, for example, includes an object recognizing unit 120, a movable area recognizing unit 130, and a control unit 140. For example, these are realized by a hardware processor such as a central processing unit (CPU) executing the program (software)74. Some or all of such constituent elements may be realized by hardware (circuit units; including circuitry) such as a large scale integration (LSI), an application specific integrated circuit (ASIC), a field-programmable gate array (FPGA), a graphics processing unit (GPU), and the like or may be realized by the collaboration of software and hardware. The program may be stored in the storage device 70 in advance, or the program may be stored on a storage medium (a non-transitory storage medium) that can be loaded or unloaded such as a DVD, a CD-ROM, or the like and be installed in the storage device 70 by mounting the storage medium in a drive device.

The object recognizing unit 120 recognizes objects present in the vicinity of the moving body 1 on the basis of the output of the external detection device 10. Objects include some or all of moving bodies such as a vehicle, a bicycle, pedestrians, and the like, runway boundaries such as a road dividing line, a bump, a guardrail, a shoulder, a median strip, and the like, structures on the road such as a road sign, a billboard, and the like, and obstacles such as a falling object and the like present (falling) on the roadway. Objects recognized by the object recognizing unit 120 include dynamic objects such as persons and other moving bodies. For example, by inputting an image captured by an external camera of the external detection device 10 to a learned model that has learned to output information such as the presence, the locations, the types, and the like of objects when an image captured by the external camera of the external detection device 10 is input, the object recognizing unit 120 obtains information such as the presence, the locations, the types, and the like of other moving bodies. The type of another moving body can also be estimated on the basis of the size in the image, the strength of reflected waves received by a radar device of the external detection device 10, and the like. In addition, the object recognizing unit 120, for example, obtains speeds of the other moving bodies detected by the radar device using Doppler shift or the like.

The movable area recognizing unit 130 recognizes an area to which the moving body 1 can move (a movable area) for the surrounding area of the moving body 1 on the basis of a recognition result of a dynamic object acquired by the object recognizing unit 120. The movable area recognizing unit 130, for example, analyzes a depth image captured by the external camera of the external detection device 10 to recognize an area of obstacles in the vicinity of the moving body 1 (an obstacle area) and an area of blind spots (a blind spot area) from the moving body 1 due to the obstacles and recognizes areas other than the obstacle area and the blind spot area as movable areas.

The control unit 140, for example, controls the driving device 40 in accordance with a set driving mode. The driving mode is set to one of a plurality of modes according to the entity responsible for steering and acceleration/deceleration. For example, the driving mode includes a first driving assistance mode in which an occupant performs a steering operation, and acceleration/deceleration control is automatically performed, a second driving assistance mode in which an occupant performs an acceleration/deceleration operation, and steering control is automatically performed, a manual driving mode in which an occupant performs a steering operation and an acceleration/deceleration operation, an automatic driving mode in which operation control and acceleration/deceleration control are automatically performed, and the like. The driving mode may be changed by an occupant's operation or the control unit 140, and the moving body 1 may include a mechanical switch that receives a driving mode switching operation, a graphical user interface (GUI) switch set on a touch panel, or the like.

The control unit 140 sets a movement path of the moving body 1 within the movable area recognized by the movable area recognizing unit 130 and controls the moving mechanism 30 and driving device 40 of the moving body 1 such that the moving body moves along the set movement path. The movement path may be determined in accordance with the driving mode, a set destination, and the like.

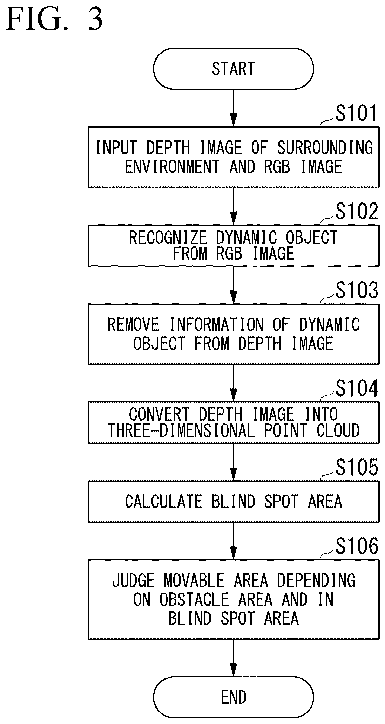

FIG. 3 is a diagram illustrating an example of the flow of a process in which the control apparatus 100 recognizes a movable area for the moving body 1. First, the control apparatus 100 obtains a depth image and an RGB image of the surrounding area of the moving body 1 from the external detection device 10 (S101). Subsequently, the object recognizing unit 120 executes image processing used for recognizing dynamic object from the RGB image acquired in S101 (S102). The method of recognizing dynamic objects from an RGB image here is not limited to a specific method. For example, in detection of dynamic objects, a real-time object detection algorithm such as YouLookOnlyOnse (YOLO) or the like can be used. YOLO detects target objects within an image using a Convolutional Neural Network (CNN) constructed through machine learning.

Other than such a technique using machine learning, dynamic objects may be recognized on the basis of feature quantities extracted from an image. For example, the object recognizing unit 120 may extract feature quantities of subjects from an RGB image and recognize a subject having a feature quantity indicating features of a dynamic object among them as a dynamic object. For example, the object recognizing unit 120 may extract feature quantities of a person, an animal, other moving bodies, and the like as feature quantities that may indicate dynamic objects. The object recognizing unit 120 supplies a dynamic object recognition result to the movable area recognizing unit 130. For example, the object recognizing unit 120 supplies information representing a range of a dynamic object within the RGB image to the movable area recognizing unit 130 as a result of recognition.

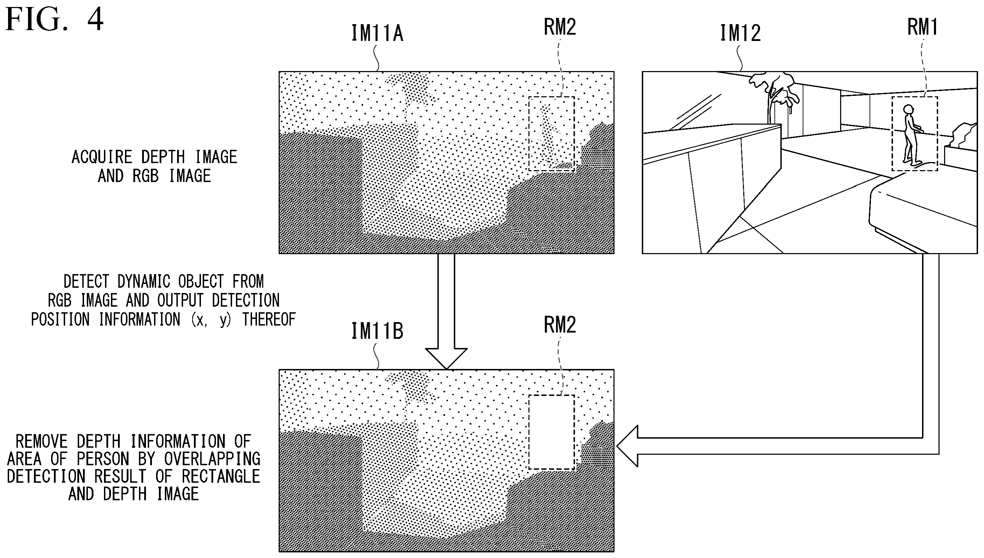

Subsequently, the movable area recognizing unit 130 removes the information of the dynamic object from the depth image on the basis of the depth image acquired in S101 and the recognition result of the dynamic object in S102 (S103). FIG. 4 is a diagram for describing an example of the process of removing information of dynamic objects from a depth image. Image IM11A illustrated in the drawing is a depth image before removal of the information of dynamic objects, and image IM11B is a depth image after removal of the information of dynamic objects. On the other hand, image IM12 illustrated in the drawing is an RGB image in which a dynamic object is imaged in an imaging range RM1. Although the images IM11A and IM12 are acquired by imaging the same spatial range, the RGB image IM12 is an image in which the luminance of a subject is recorded, and the depth image IM11A is an image in which a depth to the subject is recorded. In this case, for example, the movable area recognizing unit 130 can remove the depth information of the dynamic object from the depth image IM11A by masking the depth information of the range RM2 in which the dynamic object has been imaged within the depth image IM11A with a zero or a null value.

In the example illustrated in FIG. 4, since the depth image IM11A and the RGB image IM12 are images in which the same spatial range has been imaged, the movable area recognizing unit 130 can directly apply the recognition range RM1 of the dynamic object in the RGB image IM12 to the imaging range RM22 of the dynamic object in the depth image IM11A. In this way, since it is convenient for recognizing the correspondence of the imaging range, in this embodiment, the depth image and the RGB image input to the control apparatus 100 are assumed to be acquired as images in which the same spatial range has been imaged. As in a case in which the optical system capturing a depth image is physically different from the optical system capturing an RGB image or the like, in a case in which the imaging range of the depth image does not directly correspond to the imaging range of the RGB image, the movable area recognizing unit 130 may be configured to convert the imaging range on the basis of imaging parameters of each optical system.

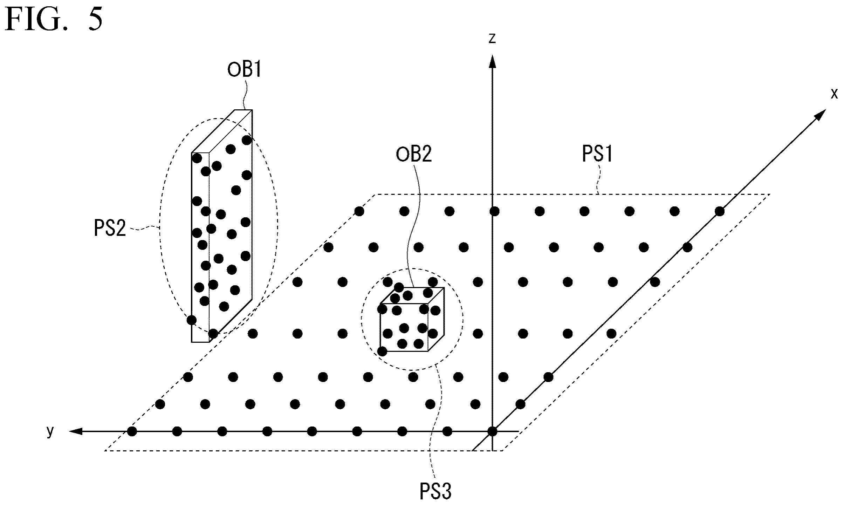

Description will be continued with reference to FIG. 3. Subsequently, the movable area recognizing unit 130 converts the depth image from which the depth information of dynamic objects has been removed into a three-dimensional point cloud (S104), acquires an area in the surrounding space of the moving body 1 that becomes a blind spot from the moving body 1 due to a dynamic object or an obstacle (a blind spot area) using geometric calculation based on the coordinates of the three-dimensional point cloud, and stores the blind spot area in a three-dimensional space (S105). FIGS. 5 to 10 are diagrams for describing an example of the process of acquiring blind spot areas from a depth image from which depth information of dynamic objects has been removed.

FIG. 5 is a diagram illustrating an example of a three-dimensional point cloud converted from a depth image. As described above, a depth image is an image that represents a distance (depth) from the viewpoint to a subject, and a three-dimensional point cloud of the subject can be obtained by converting the two-dimensional point cloud of this image using a camera matrix. For example, in the example illustrated in FIG. 5, the x axis and y axis represent a horizontal direction, and the z axis represents a height direction. In the example illustrated in FIG. 5, point cloud PS1 represents the floor surface, point cloud PS2 represents the surface of a first obstacle OB1, and point cloud PS3 represents the surface of a second obstacle OB2. By generating a bird's-eye view by projecting such a three-dimensional point cloud onto the xy plane (a horizontal plane), a map of the space in which the moving body 1 moves (hereinafter referred to as "surrounding area map") can be generated. The generated surrounding area map is stored in the storage device 70 as map information 72.

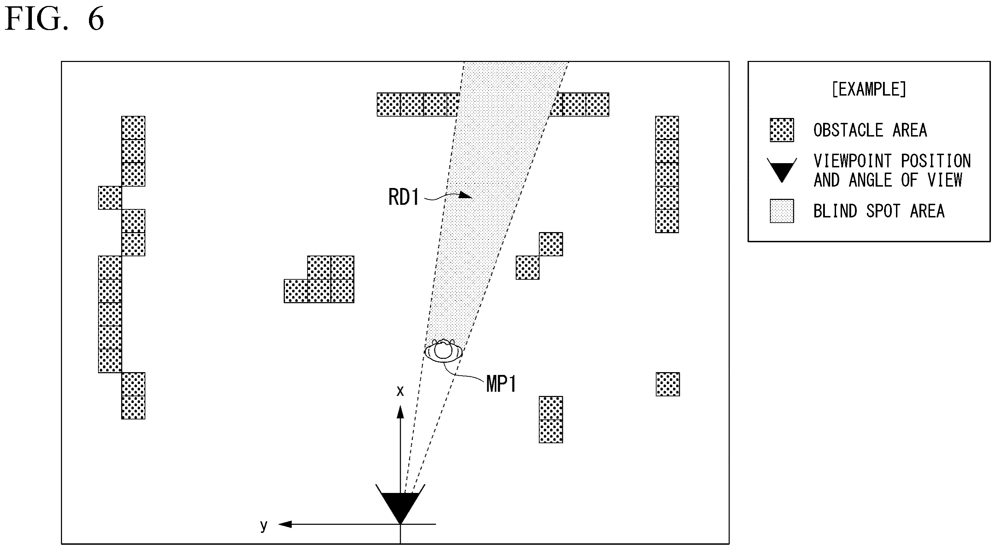

FIG. 6 is a diagram illustrating an example of a method of identifying a blind spot area on the basis of a surrounding area map generated from a three-dimensional point cloud. The surrounding area map in FIG. 6 is illustrated as a set of cells of a predetermined size. A cell may be of a size corresponding to a pixel of the depth image or a size corresponding to integration of a predetermined number of pixels. The example of the surrounding area map in FIG. 6 illustrates a situation in which, in a case in which a person MP1 recognized as a dynamic object by the object recognizing unit 120 is seen from a viewpoint of the moving body 1 (here, the position of the origin O), the person MP1 creates a blind spot area RD1 corresponding to his or her width for the moving body 1. In this case, the movable area recognizing unit 130 can recognize the viewpoint of the blind spot area RD1 and the direction of enlargement using the viewpoint position of the moving body 1 and the position of the person MP1.

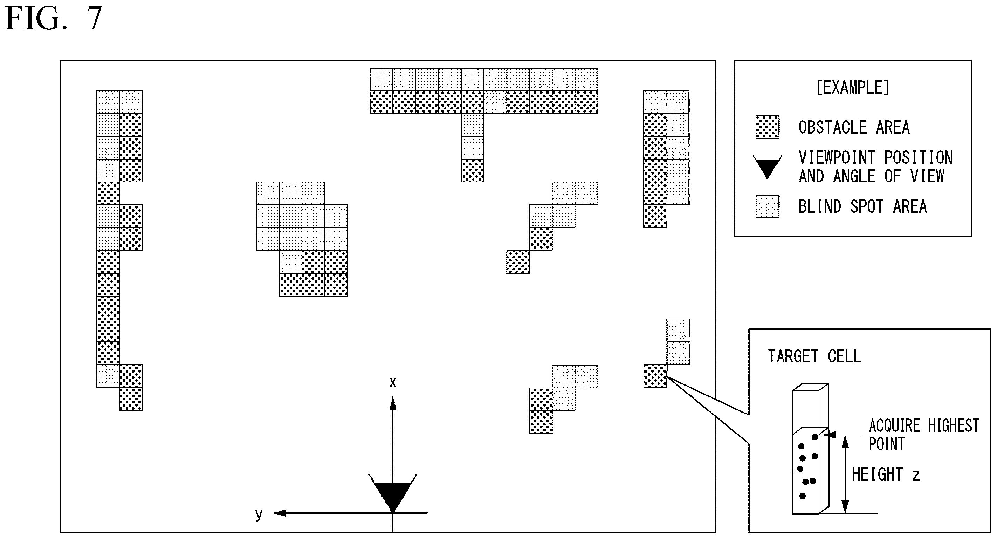

FIG. 7 is a diagram for describing an example of a method of identifying a length of enlargement (a length of the depth) for a blind spot area. FIG. 7 illustrates a case in which the length of the depth of the blind spot area formed by obstacles is identified in the example of the surrounding area map illustrated in FIG. 6. As described above, since the surrounding area map is generated from a three-dimensional point cloud, for each cell of the surrounding area map, the value (height) in the z axis direction can be obtained. Here, in a case in which a cell is acquired by integrating a plurality of pixels, for example, as illustrated in FIG. 7, there are cases in which multiple z values are associated with a target cell. In such cases, the movable area recognizing unit 130 selects a maximum value among the multiple z values as the height of this cell and estimates the length of the depth of the blind spot area according to this cell on the basis of a relation between the height of the cell and the viewpoint position of the moving body 1. The example of FIG. 7 illustrates a case in which the viewpoint of the moving body 1 is at the origins of the x axis and the y axis, and the angle of view is oriented toward the top of the paper.

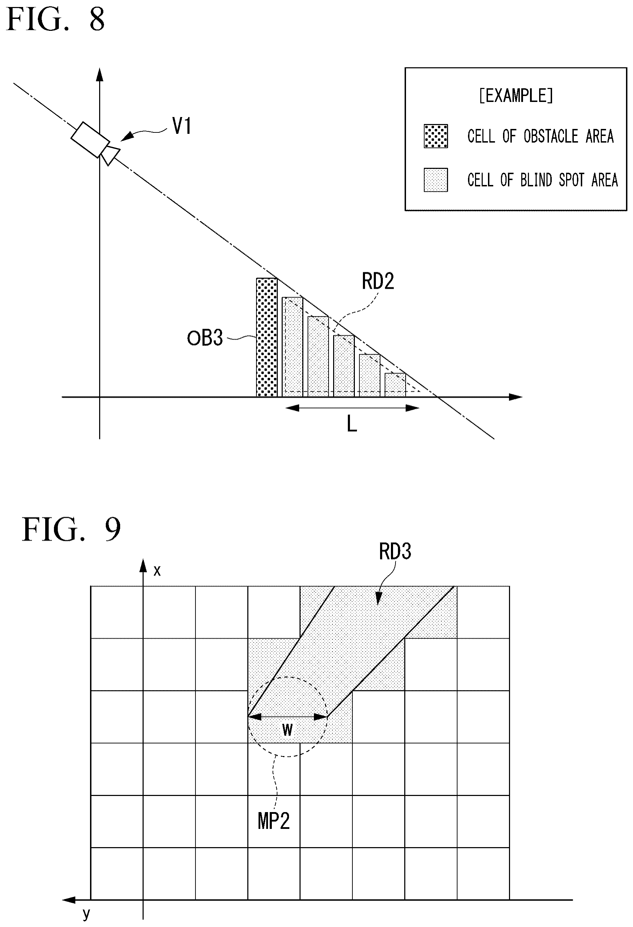

FIG. 8 is a diagram illustrating an example of a method of estimating the length of the depth of the blind spot area according to this cell on the basis of the relation between the height of the cell and the viewpoint position of the moving body 1. The example of FIG. 8 is an example in which a blind spot area RD2 formed in a case in which the moving body 1 looks down at an obstacle OB3 from a viewpoint position V1 is recognized. In this case, since the viewpoint position P of the moving body 1 is present at a position higher than the obstacle OB3, the length L of the depth of the blind spot area RD2 becomes a length obtained by projecting the height of the obstacle OB3 seen from the viewpoint position P in a depth direction (here, on the x axis) and can be obtained through geometric calculation.

In addition, the movable area recognizing unit 130 can also identify the length of the depth of a dynamic object recognized by the object recognizing unit 120 in the manner illustrated in FIG. 8. At that time, in a case in which the situation of an obstacle has not been identified for a blind spot area according to the dynamic object (in other words, in a case in which a depth image has not been obtained), the movable area recognizing unit 130 stores the blind spot area according to this dynamic object in the surrounding area map as an unclear area. FIG. 9 is a diagram illustrating an example of a blind spot area recognized as an unclear area. The example of FIG. 9 illustrates a situation in which a blind spot area RD3 corresponding to the width w of a person MP2 recognized as a dynamic object is recognized. In this situation, in a case in which the situation of obstacles has not been identified for a part or all of the blind spot area RD3, the movable area recognizing unit 130 stores the part or all of this blind spot area RD3 in the surrounding area map as an unclear area.

Thereafter, in a case in which the situation of obstacles was able to be identified for an unclear area relating to the blind spot area RD3 while analyzing a movable area on the basis of a new depth image acquired in accordance with the movement of the moving body 1, the movable area recognizing unit 130 stores the situation of obstacles that was able to be identified in the surrounding area map. For example, when the moving body 1 is moving, the movable area recognizing unit 130 can judge whether or not a cell of an unclear area is included in the field of vision of the moving body 1 by recognizing changes in the viewpoint position of the moving body 1 on the basis of drive amounts and control amounts of the driving device 40 and the moving mechanism 30, results of external field recognition, and the like. For example, in a case in which the moving body 1 has wheels, the movable area recognizing unit 130 can recognize changes in the viewpoint position by acquiring the amount of rotational displacement and the amount of radial displacement of the moving body 1 in a circular coordinate system.

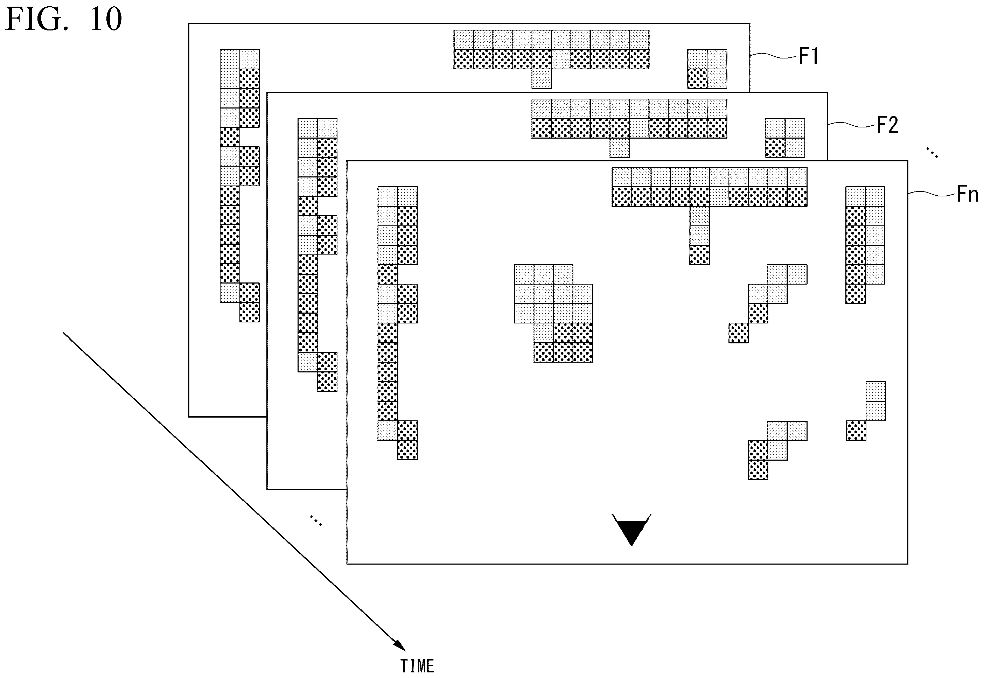

When a blind spot area is recognized in the surrounding area map, the movable area recognizing unit 130 may be configured to judge whether or not each cell is a blind spot area on the basis of results of analysis of multiple frames. FIG. 10 is a diagram illustrating an example of a method of judging a blind spot area on the basis of results of analysis of multiple frames. The example of FIG. 10 represents a case in which blind spot areas are judged on the basis of results F1, F2, ..., Fn of analysis of multiple frames acquired in a time series. In this case, the control apparatus 100 is assumed to store the results of analysis of blind spot areas for each frame separately from the surrounding area map. The movable area recognizing unit 130 calculates, for example, a reliability level based on a frequency at which each cell is judged as a blind spot area for each cell for the analysis results F1, F2, ..., Fn for multiple frames and calculates a likelihood by applying the calculated reliability levels to the Bayesian theory. The movable area recognizing unit 130 can judge whether each cell is a blind spot area or not on the basis of the likelihood calculated for each cell. Even in the case of blind spot areas, in a case in which the situation of obstacles is identified for some or all of the areas, the movable area recognizing unit 130 may recognize the some or all of the blind spot areas as movable areas.

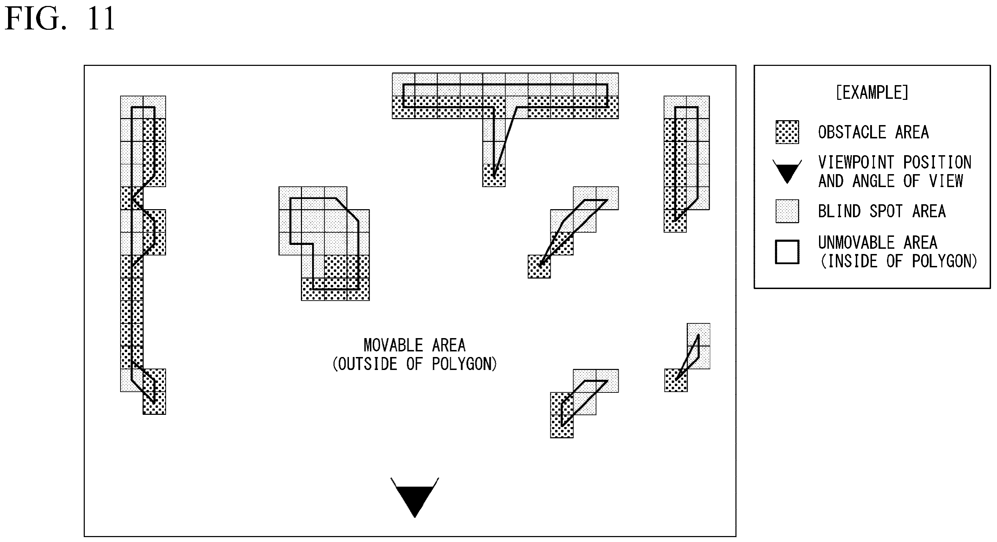

The description is continued with reference back to FIG. 3. The movable area recognizing unit 130 stores the obstacle areas and the blind spot areas in the surrounding area map as described above and judges areas other than those areas as movable areas (S106). FIG. 11 is a diagram illustrating an example of a surrounding area map generated by the movable area recognizing unit 130. For example, by connecting cells of the obstacle areas and the blind spot areas that have been recognized to form a polygon, the movable area recognizing unit 130 can recognize an area outside of this polygon as a travelable area.

By recognizing a movable area in this way, the control unit 140 of the control apparatus 100 can move the moving body 1 to avoid obstacles more safely by setting a movement path inside this movable area. Since the movable area recognizing unit 130 can appropriately update the surrounding area map in accordance with movement of the moving body 1, the control unit 140 of the control apparatus 100 can appropriately control the movement of the moving body 1 while following changes in the surrounding environment.

According to this embodiment described above, a movable area around a moving body can be recognized more appropriately.

The embodiment described above can be expressed as below.

A control apparatus for a moving body moving by recognizing a movable area, the control apparatus including: a storage medium storing computer-readable instructions; and a processor connected to the storage medium described above, the processor executing the computer-readable instructions to perform: an object recognizing process of inputting a non-depth image, which is an image in which a surrounding area of the moving body described above is imaged, not directly including depth information and recognizing a dynamic object imaged in the non-depth image described above; a movable area recognizing process of inputting a depth image in which the surrounding area of the moving body described above is imaged and recognizing a movable area in the surrounding area of the moving body described above on the basis of a recognition result of the dynamic object described above in the object recognition process described above and the depth image described above; and a control process of controlling a driving device disposed in the moving body to move in the movable area, in which in the movable area recognition process described above, a blind spot area that becomes a blind spot from the moving body described above due to an obstacle other than the dynamic object in the surrounding area of the moving body described above is recognized, and an area except for an area of the obstacle other than the dynamic object described above and the blind spot area described above is recognized as the movable area described above.

While the form for performing the present invention has been described using the embodiment, the present invention is not limited to such an embodiment, and various modifications and substitutions can be made within a range not departing from the gist of the present invention.

### REFERENCE SIGNS LIST

1 Moving body, 10 External detection device, 12 Moving body sensor, 14 Operator, 16 Internal camera, 18 Positioning device, 20 Acceleration sensor, 30 Moving mechanism, 40 Driving Device, 50 External notification device, 70 Storage device, 72 Map information, 74 Program, 100 Control apparatus, 120 Object recognizing unit, 130 Movable area recognizing unit, 140 Control unit

## Claims

1. A control apparatus for a moving body that moves by recognizing a movable area, the control apparatus comprising:
an object recognizing unit inputting a non-depth image, which is an image in which a surrounding area of the moving body is imaged, not directly including depth information and recognizing a dynamic object imaged in the non-depth image;
a movable area recognizing unit inputting a depth image in which the surrounding area of the moving body is imaged and recognizing a movable area in the surrounding area of the moving body on the basis of a recognition result of the dynamic object acquired by the object recognizing unit and the depth image; and
a control unit controlling a driving device disposed in the moving body to move in the movable area,
wherein the movable area recognizing unit recognizes a blind spot area that becomes a blind spot from the moving body due to an obstacle other than the dynamic object in the surrounding area of the moving body and recognizes an area except for an area of the obstacle other than the dynamic object and the blind spot area as the movable area.

2. The control apparatus for the moving body according to claim 1, wherein the movable area recognizing unit recognizes the area of the dynamic object as the movable area by removing depth information of the dynamic object detected from the non-depth image from the depth image.

3. The control apparatus for the moving body according to claim 1, wherein the movable area recognizing unit converts a depth image not including depth information of the dynamic object into a three-dimensional point cloud and estimates a length of a depth of the blind spot area seen from the moving body using geometric calculation based on coordinates of the three-dimensional point cloud.

4. The control apparatus for the moving body according to claim 3, wherein the movable area recognizing unit generates a surrounding area map of the moving body by projecting the three-dimensional point cloud onto a horizontal surface from a height direction.

5. The control apparatus for the moving body according to claim 4, wherein, in a case in which a situation of obstacles has not been identified for a blind spot area due to the dynamic object, the movable area recognizing unit manages the blind spot area as an unclear area until the situation of obstacles is identified and updates the surrounding area map while identifying the situation of obstacles in the unclear area in accordance with changes in a viewpoint position of the moving body.

6. The control apparatus for the moving body according to claim 3, wherein the movable area recognizing unit estimates the length of the depth of the blind spot area on the basis of a height of the obstacle and a viewpoint position of the moving body.

7. The control apparatus for the moving body according to claim 1, wherein the movable area recognizing unit estimates whether or not a target area is a blind spot area on the basis of a recognition result for the target area based on depth images of multiple frames.

8. The control apparatus for the moving body according to claim 1, wherein the movable area recognizing unit connects an area of an obstacle and the blind spot area due to the obstacle, recognizes the connected area as an unmovable area, and recognizes an area outside of the unmovable area as a movable area.

9. The control apparatus for the moving body according to claim 1, wherein, in a case in which a situation of obstacles was able to be identified for some or all of blind spot areas while performing analysis of the movable area for a new depth image acquired in accordance with movement of the moving body, the movable area recognizing unit stores information representing the situation of obstacles that were able to be identified for the some or all of the blind spot areas.

10. The control apparatus for the moving body according to claim 8, wherein the movable area recognizing unit recognizes the some or all of the blind spot areas for which the situation of obstacles was able to be identified as a movable area.

11. A control method for a moving body that moves by recognizing a movable area using a control apparatus of the moving body, the control method comprising:
an object recognizing process of inputting a non-depth image, which is an image in which a surrounding area of the moving body is imaged, not directly including depth information and recognizing a dynamic object imaged in the non-depth image; and
a movable area recognizing process of inputting a depth image in which the surrounding area of the moving body is imaged and recognizing a movable area in the surrounding area of the moving body on the basis of a recognition result of the dynamic object acquired in the movable area recognizing process and the depth image,
wherein, in the movable area recognizing process, a blind spot area that becomes a blind spot from the moving body due to an obstacle other than the dynamic object in the surrounding area of the moving body is recognized, and an area except for an area of the obstacle other than the dynamic object and the blind spot area is recognized as the movable area, and
wherein a driving device disposed in the moving body is controlled to move in the movable area.

12. A program causing a control apparatus for a moving body that moves by recognizing a movable area to execute:
an object recognizing process of inputting a non-depth image, which is an image in which a surrounding area of the moving body is imaged, not directly including depth information and recognizing a dynamic object imaged in the non-depth image;
a movable area recognizing process of inputting a depth image in which the surrounding area of the moving body is imaged and recognizing a movable area in the surrounding area of the moving body on the basis of a recognition result of the dynamic object acquired in the movable area recognizing process and the depth image; and
a control process of controlling a driving device disposed in the moving body to move in the movable area,
wherein, in the movable area recognizing process, a blind spot area that becomes a blind spot from the moving body due to an obstacle other than the dynamic object in the surrounding area of the moving body is recognized, and an area except for an area of the obstacle other than the dynamic object and the blind spot area is recognized as the movable area.
